# EUROPEAN PATENT APPLICATION

(11) **EP 4 509 566 A1**
(43) Date of publication of application: **19.02.2025**
(21) Application number: 23788413.5
(22) Date of filing: 14.04.2023
(51) Int. Cl.: C08L 101/00, C08K 3/16, C08K 3/20, C08L 1/00

(54) **PAPER ARTICLE AND SHAPED ARTICLE**

(30) Priority: 14.04.2022 JP 2022066973
(71) Applicant: Toppan Holdings Inc., Tokyo 110-0016 (JP)
(72) Inventor: TACHIKI, Sadafumi, Tokyo 110-0016 (JP); SAKAKIBARA, Ryusuke, Tokyo 110-0016 (JP); IMAI, Hiroshi, Tokyo 110-0016 (JP)
(74) Representative: TBK
(86) International application number: PCT/JP2023/015117
(87) International publication number: WO 2023/199996

(57) **Abstract**

The paper product contains a pulp derived from a used paper diaper and a resin derived from a used paper diaper.

## Description

### [Technical Field]

The present invention relates to a paper product and a molded article.

The present application claims the benefit of priority from Japanese Patent Application No. 2022-066973 filed in Japan on April 14, 2022, the contents of which are incorporated herein by reference.

### [Background Art]

There is a movement to recover and reuse constituent materials of paper diapers from used paper diapers.

For example, PTL 1 proposes a regeneration method for materials used in a used paper diaper, including decomposing an absorbent polymer contained in a paper diaper into monomers and then separating and recovering a pulp component contained in the paper diaper.

### [Citation List]

### [Patent Literature]

[PTL 1] JP 3378204 B

### [Summary of the Invention]

### [Technical Problem]

However, the method used in PTL 1 is a technique to separately reuse a pulp component and other components, and more efficient reuse of materials is required.

Therefore, an object of the present invention is a paper product and a molded article in which materials of a used paper diaper can be effectively utilized more efficiently.

### [Solution to Problem]

The present invention has the following aspects.
[1] A paper product contains a pulp derived from a used paper diaper and a resin derived from a used paper diaper.
[2] In the above-described [1], the paper product may be configured that a mass ratio between the pulp and the resin represented by (mass of the pulp):(mass of the resin) is 1:99 to 99:1.
[3] In the above-described [1] or [2], the paper product may be configured that the paper product contains an absorbent material, and a content of the absorbent material is 0.1 part by mass or more with respect to 100 parts by mass of the pulp.
[4] In any one of the above-described [1] to [3], the paper product may be configured that the paper product contains a calcium compound, and a content of the calcium compound is 0.1 part by mass or more with respect to 100 parts by mass of the pulp.
[5] In any one of the above-described [1] to [4], the paper product may be configured such that the paper product contains a coloring material, and a content of the coloring material is 0.1 to 70 parts by mass with respect to 100 parts by mass of the pulp.
[6] A molded article is obtained by hot-molding the paper product according to any one of the above-described [1] to [5].
[7] In the above-described [6], the molded article may have a decorative layer on a surface.

### [Advantageous Effects of the Invention]

According to the paper product and the molded article of the above-described aspects, materials of a used paper diaper can be effectively utilized more efficiently.

### [Brief Description of the Drawing]

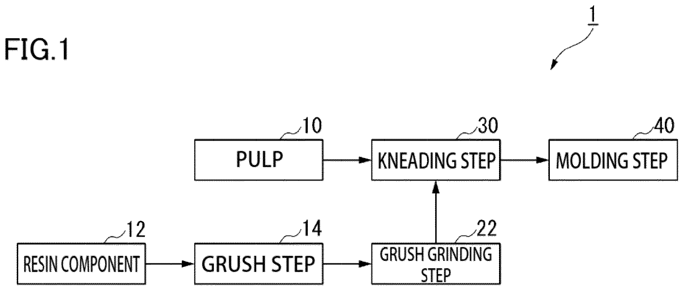

Fig. 1 is a block diagram showing a flow of a production method of a paper product according to an embodiment of the present invention.

### [Description of the Embodiments]

### [Paper Product]

As described herein, a "paper product" contains a pulp as an essential component. An example of the pulp is a softwood kraft pulp.

The paper product of the present disclosure contains a pulp derived from a used paper diaper and a resin derived from a used paper diaper. That is, in the present disclosure, a part or the whole of the pulp as an essential component is derived from a used paper diaper.

The content of the pulp derived from a used paper diaper is, for example, preferably 10 mass% or more, more preferably 50 mass% or more, and further preferably 70 mass% or more, with respect to the total mass of the paper product. When the content of the pulp derived from a used paper diaper is the above-described lower limit value or more, materials of a used paper diaper can be effectively utilized more efficiently. Although the upper limit value of the content of the pulp derived from a used paper diaper is not particularly limited, it is, for example, 99 mass%.

The content of the pulp in the paper product is determined by, for example, constituent sugar analysis. The content of the pulp derived from a used paper diaper is determined by subtracting the content of the pulp added in molding the paper product from the content of the pulp in the paper product.

The paper product may contain a pulp (hereinafter, may be referred to as an "added pulp") other than the pulp derived from a used paper diaper. When the paper product contains the added pulp, the paper quality of the paper product is further enhanced.

The content of the added pulp is, for example, preferably 70 mass% or less, more preferably 50 mass% or less, and further preferably 10 mass% or less, with respect to the total mass of the paper product. When the content of the added pulp is the above-described upper limit value or less, materials of a used paper diaper can be effectively utilized more efficiently.

The content of the added pulp can be adjusted by the amount of the pulp added in molding the paper product and appropriately adjusted depending on the paper quality required of the paper product.

From the viewpoint of further enhancing the recycling rate of a used paper diaper, the paper product contains a resin derived from a used paper diaper. The resin derived from a used paper diaper can function, in the paper product, as a binder to bond pulps. Therefore, the physical strength of the paper product is further enhanced by the paper product containing the resin derived from a used paper diaper.

Although the content of the resin derived from a used paper diaper differs depending on the product to be molded, it is, for example, preferably 0.1 to 90 mass%, more preferably 0.5 to 50 mass%, and further preferably 1 to 30 mass%, with respect to the total mass of the paper product. When the content of the resin derived from a used paper diaper is the above-described lower limit value or more, the physical strength of the paper product is further enhanced. When the content of the resin derived from a used paper diaper is the above-described upper limit value or less, the content of the pulp derived from a used paper diaper can be increased.

The content of the resin in the paper product is determined by, for example, a nuclear magnetic resonance (NMR) method, and the content of the resin derived from a used paper diaper is determined by subtracting the content of the resin added in molding the paper product from the content of the resin in the paper product.

The paper product may contain a resin (hereinafter, may be referred to as "added resin") other than the resin derived from a used paper diaper. When the paper product contains the added resin, the physical strength of the paper product is further enhanced.

Examples of the added resin include general-purpose resins such as polyethylene, polypropylene, polystyrene, and polyethylene terephthalate. Among these added resins, polyethylene and polypropylene are preferable, and polyethylene is more preferable, because the physical strength of the paper product is easily further enhanced. Examples of the polyethylene include low-density polyethylene (LDPE), linear low-density polyethylene (LLDPE), medium-density polyethylene (MDPE), and high-density polyethylene (HDPE). Examples of the polypropylene include oriented polypropylene (OPP) and cast polypropylene (CPP).

The content of the added resin is, for example, preferably 70 mass% or less, more preferably 50 mass% or less, and further preferably 10 mass% or less, with respect to the total mass of the paper product. When the content of the added resin is the above-described upper limit value or less, materials of a used paper diaper can be effectively utilized more efficiently.

The content of the added resin can be adjusted by the amount of the resin added in molding the paper product and appropriately adjusted depending on the physical properties required of the paper product.

The mass ratio between the pulp derived from a used paper diaper and the resin derived from a used paper diaper represented by (mass of the pulp):(mass of the resin) is, for example, preferably 1:99 to 99: 1. The mass ratio represented by (mass of the pulp):(mass of the resin) differs depending on the product to be molded and can be appropriately adjusted depending on the physical properties required of the paper product.

The used paper diaper of the present embodiment may contain excreta such as urine and feces but also encompasses a discarded unused paper diaper.

The used paper diaper is recycled by washing a used paper diaper and thereafter immersing the diaper in an aqueous solution containing a calcium compound to release moisture such as urine contained in an absorbent material. Thereafter, disinfection and drying are performed to separate a pulp component.

Therefore, the paper product of the present embodiment can contain, in addition to the pulp component contained in the paper diaper, the absorbent material and the calcium compound.

An example of the absorbent material is a superabsorbent polymer (SAP).

Examples of the superabsorbent polymer include sodium polyacrylate, carboxymethyl cellulose, and polyvinyl alcohol. As these superabsorbent polymers, sodium polyacrylate is preferable because it is widely used.

The content of the absorbent material is, for example, preferably 70 parts by mass or less, more preferably 50 parts by mass or less, and further preferably 10 parts by mass or less, with respect to 100 parts by mass of the pulp derived from a used paper diaper. When the content of the absorbent material is the above-described upper limit value or less, the paper quality of the paper product can be ensured. Although the lower limit value of the content of the absorbent material is not particularly limited, it is, for example, 0.1 part by mass with respect to 100 parts by mass of the pulp derived from a used paper diaper, from the viewpoint of easily identifying that the paper product contains a paper diaper as a raw material.

The content of the absorbent material is determined by, for example, an NMR method or a time-of-flight secondary ion mass spectrometry (TOF-SIMS) method.

As described herein, the absorbent material is not included in the "resin derived from a used paper diaper" and the "added resin" described above.

Examples of the calcium compound include calcium chloride, calcium oxide (quicklime) and calcium hydroxide (slaked lime). Since a calcium compound is widely used as a dehydrating material, calcium chloride is preferable as the calcium compound.

The content of the calcium compound is, for example, preferably 70 parts by mass or less, more preferably 50 parts by mass or less, and further preferably10 parts by mass or less, with respect to 100 parts by mass of the pulp derived from a used paper diaper. When the content of the calcium compound is the above-described upper limit value or less, the paper quality of the paper product can be ensured. Although the lower limit value of the content of the calcium compound is not particularly limited, it is, for example, 0.1 part by mass with respect to 100 parts by mass of the pulp derived from a used paper diaper, from the viewpoint of easily identifying that the paper product contains a paper diaper as a raw material.

The content of the calcium compound is determined by, for example, an X-ray diffraction (XRD) method or X-ray photoelectron spectroscopy (XPS).

From the viewpoint of having good appearance, the paper product of the present embodiment may contain a coloring material such as a pigment or a dye.

The content of the coloring material is, for example, preferably 0.1 to 70 parts by mass, more preferably 1 to 50 parts by mass, and further preferably 5 to 30 parts by mass, with respect to 100 parts by mass of the pulp derived from a used paper diaper. When the content of the coloring material is the above-described lower limit value or more, the paper product can have better appearance. When the content of the coloring material is the above-described upper limit value or less, the paper quality of the paper product is further enhanced.

The content of the coloring material is determined by, for example, an NMR method or a TOF-SIMS method.

The form of the paper product is not particularly limited, and examples thereof include a press-molded board, a paper tube subjected to paper making, and a molded article subjected to hot molding.

The paper product can be used for various uses, and are usable as, for example, a fiber-recycling board, a noninflammable board for building materials, a paper tube, and a molded article such as a packaging container to house electronic equipment.

### [Molded Article]

The molded article of the present disclosure is obtained by hot-molding the paper product of the present disclosure.

The molded article of the present embodiment contains a pulp derived from a used paper diaper and a resin derived from a used paper diaper. Therefore, the molded article of the present embodiment achieves effective utilization of materials of a used paper diaper.

From the viewpoint of having a good appearance, the molded article of the present embodiment may have a decorative layer on a surface.

Examples of the decorative layer include a print layer having a surface subjected to printing and a decoration layer having a surface subjected to decoration.

### [Production Method of Paper Product]

The paper product of the present disclosure can be produced in the same manner as in a known paper product, except that a used paper diaper is used as a raw material.

The production method of the paper product of the present embodiment will be described in detail with reference to the drawing.

As shown in Fig. 1, a production method 1 of the paper product of the present embodiment includes a grush step 14, a grush grinding step 22, a kneading step 30, and a molding step 40.

An example of a pulp 10 is a pulp component separated from a used paper diaper.

The paper diaper of the present embodiment is constituted by, for example, a surface material, a leakproof three-dimensional gathering, an absorbent material, a waterproof material, and the like. An example of the surface material is a non-woven cloth made of polyethylene or polypropylene. An example of the leakproof three-dimensional gathering is a composite of a non-woven cloth and a stretchable material.

An example of the absorbent material is a composite of an absorbent paper, a pulp, and a polymer absorber. An example of the waterproof material is a non-woven cloth including synthetic fiber that covers the outer side of the paper diaper. The paper diaper may further have a member such as an adhesive tape for fastening the paper diaper or a fastening material.

An example of a resin component 12 is a resin component separated from a used paper diaper.

The grush step 14 is a step of rotating the resin component 12 to reduce the volume of (compress) the resin component 12 taking advantage of friction heat and shear heat at the rotation.

Since the production method of the paper product of the present embodiment has the grush step 14, a volume-reduced product (gush) in which the volume of the resin component 12 is reduced can be obtained. Since the resin component 12 is not melted in the grush, the grush is less deteriorated and can be efficiently mixed and blended. Therefore, a large amount of the grush can be treated in the subsequent grush grinding step 22.

In the grush step 14, an apparatus such as a hopper for rotating the resin component 12 while shearing can be used.

In the kneading step 30, a known kneading apparatus such as a mixer can be used.

In the kneading step 30, for example, various additives, other than the added resin and the coloring material, may be added depending on the desired paper quality of the paper product. When various additives are added, functions of various additives can be imparted to the paper product.

Examples of various additives include an antioxidant, a UV absorber, an antimicrobial material, a deodorant, a softener, and a biodegradability-imparting material.

The added amount of various additives is, for example, preferably 0.1 to 70 parts by mass, more preferably 1 to 50 parts by mass, and further preferably 5 to 30 parts by mass, with respect to 100 parts by mass of the pulp derived from a used paper diaper. When the added amount of various additives is the above-described lower limit value or more, functions of various additives can be imparted to the paper product. When the added amount of various additives is the above-described upper limit value or less, the paper quality of the paper product can be ensured.

The molding step 40 is a step of molding the kneaded product obtained in the kneading step 30 to obtain a paper product.

In the molding step 40, the kneaded product may be poured into a mold or the like and thereafter hot-molded to obtain a molded article.

When the molded article has a decorative layer, a method for providing the decorative layer is not particularly limited. Examples of the method include a method of coating the surface of the molded article with an adhesive material or the like and thereafter laminating a decorative layer and curing the adhesive material to provide a decorative layer and a method of integrally molding a decorative layer and a molded article by extrusion molding or the like to provide a decorative layer.

Although the paper product of the present disclosure has been described in detail with reference to the drawing, specific configurations are not limited to this embodiment and also include modifications, combinations, and the like of the configurations within a range not departing from the spirit of the present disclosure.

For example, a part of the pulp of a used paper diaper may be used as a raw material, or all thereof may be used as a raw material.

For example, the pulp of a used paper diaper may be subjected to paper making to obtain a paper product such as a paper tube.

For example, biodegradability can be imparted to the paper product so that a step for discarding the paper product can be omitted to reduce loads on the global environment.

Since the paper product or the molded article of the present disclosure includes a pulp component and a resin component of a used paper diaper as a raw material, materials of a used paper diaper which were discarded in the past can be effectively utilized more efficiently. This can reduce the discarded amount of a used paper diaper and the loads on the global environment.

The paper product or the molded article of the present disclosure enables materials of a paper diaper to be distributed in the market as a new commercial product without the necessity of separating 100% of the materials for each material. Therefore, accuracy in the separation step in which accurate separation was required can be reduced, and a paper product or a molded article can be produced more easily.

The paper product or the molded article of the present disclosure can be used as a raw material for further reuse.
This can reduce the wasted resources resulting from discarding or the like and the loads on the global environment.

### [Industrial Applicability]

According to the paper product and the molded article of the above-described embodiment, materials of a used paper diaper can be effectively utilized more efficiently.

### [Reference Signs List]

1 Production method of paper product
10 Pulp
12 Resin component
14 Grush step
22 Grush grinding step
30 Kneading step
40 Molding step

## Claims

1. A paper product comprising a pulp derived from a used paper diaper and a resin derived from a used paper diaper.

2. The paper product according to claim 1, wherein a mass ratio between the pulp and the resin represented by (mass of the pulp):(mass of the resin) is 1:99 to 99:1.

3. The paper product according to claim 1 or 2, wherein the paper product contains an absorbent material, and a content of the absorbent material is 0.1 part by mass or more with respect to 100 parts by mass of the pulp.

4. The paper product according to claim 1 or 2, wherein the paper product contains a calcium compound, and a content of the calcium compound is 0.1 part by mass or more with respect to 100 parts by mass of the pulp.

5. The paper product according to claim 1 or 2, wherein the paper product contains a coloring material, and a content of the coloring material is 0.1 to 70 parts by mass with respect to 100 parts by mass of the pulp.

6. A molded article obtained by hot-molding the paper product according to claim 1 or 2.

7. The molded article according to claim 6, which has a decorative layer on a surface.
